# EUROPEAN PATENT SPECIFICATION

(11) **EP 3 415 387 B1**
(45) Date of publication and mention of the grant of the patent: **16.09.2020**
(21) Application number: 18178116.2
(22) Date of filing: 15.06.2018
(51) Int. Cl.: B60T 17/04, B60T 17/06, F17C 13/08, B60T 11/26

(54) **SYSTEM FOR STABLE CONNECTION OF A RESERVOIR FOR COMPRESSED AIR OR HYDRAULIC OIL TO A VEHICLE FRAME**
STABILES BEHÄLTERBEFESTIGUNGSSYSTEM EINES DRUCKLUFT- ODER HYDRAULIKÖLBEHÄLTERS AN EINEM FAHRZEUGRAHMEN
SYSTÈME DE FIXATION STABILE D'UN RÉSERVOIR D'AIR COMPRIMÉ OU HUILE HYDRAULIQUE, DANS UN CHÂSSIS-CADRE DU VÉHICULE

(30) Priority: 15.06.2017 IT 201700066784
(43) Date of publication of application: 19.12.2018
(73) Proprietor: IVECO MAGIRUS AG, 89079 Ulm (DE)
(72) Inventor: LEOKA, Georg, 89075 Ulm (DE); BAUR, Franz, 88480 Achstetten (DE)
(74) Representative: Fiume, Orazio

(56) References cited:
- EP-A1- 2 199 167
- EP-A2- 1 970 273
- TW-A- 201 339 466
- US-A1- 2012 174 371

## Description

### Priority claim

This application claims priority from Italian Patent Application No. 102017000066784 filed on June 15, 2017.

### Field of the invention

The present invention relates to the field of compressed air or hydraulic oil cylinders, and in particular to a system for connecting a reservoir to a vehicle frame.

### State of the art

Compressed air reservoirs, commonly called "cylinders", are widely used in heavy vehicles to store compressed air necessary for the operation of the braking system and/or of the vehicle suspension. Such a reservoir fastening system representing the known state of the art is described in the document EP2199167A1.

They have a cylindrical longitudinal shape with a shell for each base. Each shell has a central port to which a pneumatic connector can be screwed to connect the reservoir to an on-board compressed air system.

Generally, the port has a female thread and the connector has a corresponding male thread.

A compressed air cylinder is generally laterally connected to one of the longitudinal members forming the vehicle frame or is connected to a cross member, which joins the two longitudinal members based on the size of the compressed air reservoir and the useful distance between the longitudinal members.

The connection occurs by means of brackets that, on a first side, are connected to the vehicle frame and on a second side are connected to a cylinder.

The second side includes holes corresponding to as many seats made in a shell. A screw simultaneously engages a hole in a bracket and the corresponding seat of the shell, thus fastening the reservoir to the bracket.

The manufacturing of these seats in the shells of compressed air reservoirs is often problematic, because it can induce anomalous tensions in the shell with a consequent breaking of the same.

An analogous problem may arise if the shell is made of a composite material such as resin, carbon fibres, etc. In this case, since the resin is not suitable for being threaded, suitable metal inserts defining the aforesaid threaded seats are preferably embedded in said shells of composite material. This obviously complicates the manufacturing process proportionally to the number of metal elements to be embedded in the resin, thus increasing production costs.

Hydraulic reservoirs are also often used in vehicles. Generally, they are connected to the frame by means of dedicated flanges, which are different from those used for compressed air reservoirs. Therefore, it is necessary to keep in stock different connecting brackets for the different reservoirs to be connected to a vehicle frame. EP2199167 shows a system for the connection of pneumatic reservoirs to a vehicle frame. The connection is direct. The implementation of the solution described in EP2199167 led to the breaking of the ends of pneumatic reservoirs, even when the relative breaking load is far greater than the weight of the reservoir.

### Summary of the invention

Therefore, the object of the present invention is to overcome all the aforementioned drawbacks and to provide a system for stable connection of a reservoir for compressed air or hydraulic oil to a vehicle frame.

"Stable connection" means that the reservoir becomes an integral part of the vehicle and its disassembly is not expected except when it is necessary to check the efficiency of the reservoir.

The situation has been analysed by carrying out various laboratory tests, which showed that the high frequency vibrations transmitted to the reservoirs are the cause of the reservoir breaking. These vibrations are generated both by the unevenness of the road and by the inner combustion engine connected to the industrial vehicle.

The founding idea of the present invention is to connect a port of a reservoir to a structural part of an industrial vehicle by interposing vibration-damping means.

This port passes through the connecting structural element, be it a bracket or an element of the frame of the industrial vehicle, thus allowing the pneumatic/hydraulic connection of the reservoir to an on-board pneumatic/hydraulic system.

According to a first variant of the present invention, the damping means are made by means of a cylindrical sleeve on which a coating of resilient material, such as rubber, is annularly fitted. This coating is arranged so as to be interposed between the cylindrical sleeve and a corresponding seat in the bracket or in a structural element of the vehicle frame, such as e.g. a longitudinal member of the vehicle frame or a cross member mutually connecting the longitudinal members of the vehicle frame. The sleeve comprises a first end, equipped with a compatible thread and complementary to the one of the reservoir port, and a second end, opposite the first, comprising an outer or inner thread for connecting to the cylindrical sleeve the aforesaid pneumatic/hydraulic connector for the pneumatic/hydraulic connection of the reservoir to the on-board pneumatic/hydraulic system.

The seat of the bracket or of the structural part of the vehicle frame is through, so that the second end of the cylindrical sleeve remains accessible to provide said pneumatic/hydraulic connection.

According to a preferred variant of the invention, the second end of the cylindrical sleeve further comprises an outer thread on which a locking ring nut can be screwed, said locking ring nut preventing any axial movement of the reservoir with respect to the locking seat.

According to a further aspect of the invention, which is synergistic with the previous one, the bracket can also be provided with one or more bends having the purpose of filtering the stress that propagates from the road to the reservoir through the vehicle frame.

Such a bend in the bracket can be combined or can replace said annular coating made of resilient material of the cylindrical sleeve.

It is in fact evident that the reservoir port is designed for a pneumatic/hydraulic connection of the reservoir and not for its support. The introduction of the coating made of resilient material and/or of the bend aims to provide a vibration filter device.

What previously described can be referred to one or both opposite sides of the reservoir, and in particular to the shells of a compressed air reservoir, such shells being arranged at the opposite bases of the cylindrical body of the compressed air reservoir.

It is the object of the present invention a system for the connection of a reservoir of compressed air or hydraulic oil to a vehicle frame.

Moreover, when the brackets supporting a reservoir are fastened to different structural elements of the frame, it may happen that these elements, subjected to heavy loads, are elastically deformed. Advantageously, the sleeve or the bend made in a support bracket allows compensating such elastic deformations of the frame to which the reservoir is connected.

The claims describe preferred variants of the invention and form an integral part of the present description.

### Brief description of the figures

Further objects and advantages of the present invention will become clear from the following detailed description of an embodiment thereof (and its variants) and from the annexed drawings, given purely for explanatory and non-limiting purposes, in which:
Figure 1 shows a view according to a section of an embodiment of the connection system object of the present invention with a portion of a compressed air reservoir, in which the section is longitudinal according to the development of the reservoir;
Figure 2 shows an enlargement of a portion of Figure 1;
Figure 3 shows a side view corresponding to the view of Figure 1 of a further preferred variant of the present invention.

The same reference numbers and letters in the figures identify the same elements or components.

In the present description, the term "second" component does not necessarily imply the presence of a "first" component. These terms are in fact used only for clarity's sake and are not meant as limiting.

### Detailed description of embodiments

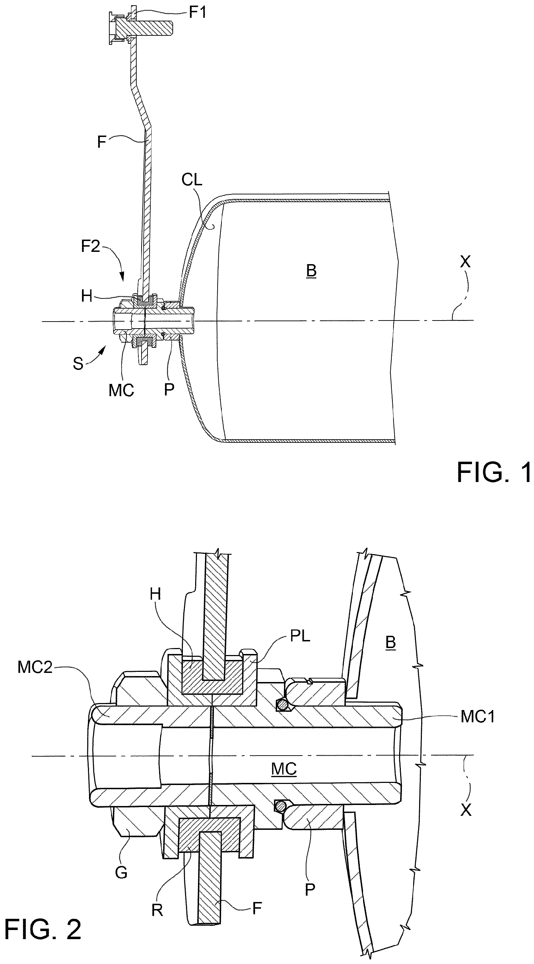

Figure 1 shows a portion of a compressed air reservoir B according to a longitudinal section. It is known that compressed air reservoirs, also called "cylinders", are cylindrical and have a rotation axis X.

At one end of the reservoir, there is a so-called shell CL, housing a central port P, which allows the operating pneumatic connection of the reservoir to a vehicle pneumatic system.

Analogously, a hydraulic oil reservoir, regardless of its shape, has at least one port for its hydraulic connection to an on-board hydraulic system.

The pneumatic or hydraulic system of the vehicle can relate to the braking system and/or to the suspensions and/or to any application connected to the vehicle.

According to the present invention, the stable connection system S of the compressed air reservoir B to a vehicle frame comprises a cylindrical tubular sleeve MC having a first end MC1 and a second end MC2 opposite the first, wherein the first end is compatible and complementary to the central port P of the shell, whereas the second end MC2 is configured to define a second port P1 allowing a pneumatic/hydraulic connection of the reservoir to said on-board pneumatic/hydraulic system.

The system further comprises a support element F, which may consist of a bracket F or of a structural part of the vehicle frame, such as a longitudinal member or a cross member which joins a pair of longitudinal members.

For example, a cylinder can be arranged transversely to the longitudinal members of a vehicle with both longitudinal members provided with seats housing the sleeves to be connected to the opposite bases of the compressed air reservoir.

This definitely requires no use of brackets.

A bracket, on the other hand, has a first end F1 and a second end F2 opposite the first, in which said first end is configured to be permanently connected to a vehicle frame and said second end comprises a seat H complementary to said sleeve MC.

The figures show that the seat H consists of a through opening, which is circular and annular with respect to the sleeve, when the system S is assembled.

Furthermore, the system comprises a filter device R, BT for filtering the vibrations that propagate from the vehicle frame to the reservoir B.

According to a first preferred variant of the invention, the filter device comprises an annular coating made of resilient material interposed between the sleeve and the seat H of the flange F, which envelops the sleeve MC for at least a portion of the relative longitudinal extension of the sleeve.

According to another preferred variant of the invention, which can be combined with or can replace the previous one, the filter device comprises one or more bends BT obtained in a longitudinal extension of the flange F to make it elastic.

The second end MC2 of the sleeve comprises an outer thread and the system comprises a locking ring nut G, configured to be connected to the outer thread of the second end of the sleeve, thus preventing any axial movement of the reservoir with respect to the seat H of the flange F. Alternatively, the second port P1 is made by means of said outer thread, so that the pneumatic connector, not shown, which connects the reservoir to the on-board pneumatic/hydraulic system, can be threaded on said outer thread to make said pneumatic connection and at the same time to lock the reservoir with respect to the flange, thus preventing any axial movement of the reservoir with respect to said seat H of said flange.

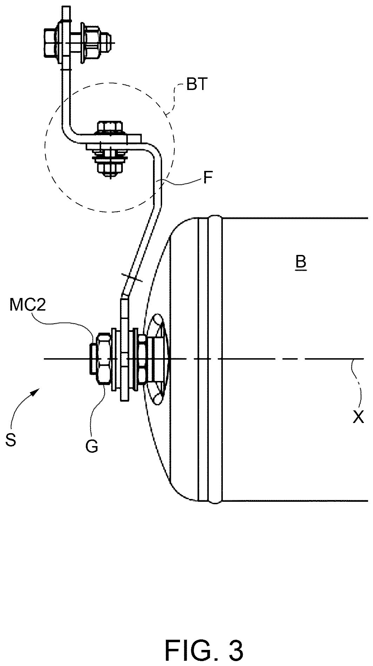

The flange F, as shown in Figure 3, can be made of several parts, interconnected by connecting screws.

According to a preferred embodiment of the invention, the coating made of resilient material R is in contact with an inner base of a pulley PL made of two halves, which are separable along a plane perpendicular to a rotation axis X of the pulley. Said rotation axis, as shown in the figure, coincides with the rotation axis of the reservoir due to the fact that, like all compressed air reservoirs, it is cylindrically symmetrical and due to the fact that the relative port is central.

The coating made of resilient material, preferably rubber, has a radial section approximately rectangular and on three sides it is in physical contact with the pulley, while the fourth side is in physical contact with the seat H in the flange.

It is clear that the seat can have any shape, for example rectangular. Therefore, the rubber coating is internally complementary to the sleeve MC and externally complementary to the seat H.

The two halves of the pulley remain mutually stably assembled due to the presence of the ring nut G or of the pneumatic/hydraulic connector, which axially blocks the pulley and the reservoir by means of the sleeve MC working as a screw.

In this way, the pulley remains compressed between the ring nut or the pneumatic/hydraulic connector and the cylinder body.

According to the present invention, an industrial vehicle comprises a pneumatic system and a compressed air reservoir or a hydraulic reservoir B connected to the frame by means of a connection system according to one of the examples described above.

Preferably, the vehicle comprises a frame formed by a pair of longitudinal members, which are approximately parallel to each other and in which the reservoir B is connected to the frame so that the relative development axis X of the reservoir is parallel to a plane identified by the longitudinal members.

Modified embodiments of the described non-limiting example are possible without departing from the scope of protection of the present invention, including all equivalent embodiments for a person skilled in the art.

From the above description, the person skilled in the art is able to manufacture the object of the invention without introducing further manufacturing details. The elements and features illustrated in the various preferred embodiments, including the drawings, may be combined with each other without departing from the scope of protection of the present application. What described in the section on the state of the art only requires a better understanding of the invention and does not represent a declaration of existence of what has been described. Moreover, if not specifically excluded in the detailed description, what described in the section on the state of the art is to be considered as an integral part of the detailed description.

## Claims

1. A system (S) for stable connection of a reservoir (B) for compressed air or hydraulic oil to a vehicle frame, the reservoir (B) having a central port (P) configured to enable a pneumatic/hydraulic connection of the reservoir to a pneumatic/hydraulic system of said vehicle, the system comprising:
- a cylindrical tubular sleeve (MC) having a first end (MC1) and a second end (MC2) opposite the first one, wherein the first end is threaded in a way complementary with respect to said port (P) and wherein said second end (MC2) is configured to define a second port (P1), thus enabling a pneumatic/hydraulic connection of the reservoir to said pneumatic/hydraulic system;
- a support element (F), which is stably connected to the frame of said vehicle or defines a frame portion of said vehicle and comprises a seat (H) complementary to said sleeve (MC); and
- a filter device (G R,BT) for filtering vibrations that propagate from the frame of said vehicle to said reservoir arranged between said support element and said tubular sleeve (MC) .

2. The system according to claim 1, wherein said filter device comprises an annular coating (R) made of resilient material that envelops said sleeve (MC) for at least a portion of a corresponding longitudinal development, thus being interposed between said sleeve and said seat (H) of said flange (F).

3. The system according to claim 1 or claim 2, wherein said support element comprises a flange having a first end (F1) configured to be stably connected to said vehicle frame and a second end (F2) opposite the first, comprising said seat (H) and wherein said filter device comprises one or more bends provided in a longitudinal development of said flange (F) to make it elastic.

4. The system according to any one of the preceding claims, wherein said second end (MC2) of the sleeve comprises an outer thread, and the system comprises a locking ring nut (G) designed to be connected to said outer thread to prevent any axial movement of said reservoir with respect to said seat (H) of said support element.

5. The system according to any one of the preceding claims 1 to 3, wherein said second port (P1) is obtained by means of an outer thread, and wherein said system further comprises a pneumatic/hydraulic connector designed to be screwed on said outer thread to provide said pneumatic/hydraulic connection and simultaneously prevent any axial movement of said reservoir with respect to said seat (H) of said support element.

6. The system according to any one of the preceding claims, wherein said flange is made of several parts that can be connected by means of connection screws.

7. The system according to claim 2, wherein said coating (R) is in contact with an inner base of a pulley (PL) made up of two halves that can be separated along a plane perpendicular to a rotation axis (X) of the pulley.

8. A vehicle comprising a frame and a pneumatic/hydraulic system with a corresponding reservoir (B) connected to the frame by means of a connection system according to any one of claims 1 to 7.

9. The vehicle according to claim 8, wherein said frame is formed by a pair of approximately parallel longitudinal members and wherein said reservoir (B) is connected to the frame so that a corresponding development axis (X) of the reservoir is approximately parallel to a plane identified by said longitudinal members.

10. The vehicle according to claim 8, wherein said frame is formed by a pair of approximately parallel longitudinal members and wherein said reservoir (B) is transversely connected to said longitudinal members and wherein said seat (H) is provided in at least one of the two longitudinal members.

## Patentansprüche

1. Ein System (S) zur stabilen Befestigung eines Behälters (B) für Druckluft oder Hydrauliköl an einem Fahrzeugrahmen, wobei der Behälter (B) einen zentralen Anschluss (P) hat, der ausgeführt ist, um eine pneumatische/hydraulische Verbindung des Behälters an ein pneumatisches/hydraulisches System des Fahrzeugs zu ermöglichen, wobei das System umfasst:
- eine zylindrische, schlauchförmige Hülse (MC) mit einem ersten Ende (MC1) und einem zweiten Ende (MC2) gegenüber dem ersten, wobei das erste Ende mit einem zu dem Anschluss (P) komplementären Gewinde versehen ist und wobei das zweite Ende (MC2) ausgeführt ist, um einen zweiten Anschluss (P1) zu definieren, wodurch eine pneumatische/hydraulische Verbindung des Behälters an das pneumatische/hydraulische System ermöglicht wird;
- ein Stützelement (F), welches stabil mit dem Rahmen des Fahrzeugs verbunden ist oder einen Rahmenabschnitt des Fahrzeugs definiert und eine zu der Hülse (MC) komplementäre Aufnahme (H) umfasst; und
- ein Filterelement (R, BT) zur Filterung von Schwingungen, die sich vom Rahmen des Fahrzeugs zum Behälter hin ausbreiten, angeordnet zwischen dem Stützelement und der rohrförmigen Hülse (MC).

2. System nach Anspruch 1, wobei das Filterelement eine ringförmige Beschichtung (R) umfasst, die aus einem elastischen Material besteht, das die Hülse (MC) zumindest für einen Teil einer entsprechenden Längserstreckung umhüllt, wodurch es zwischen der Hülse und der Aufnahme (H) des Elements (F) angeordnet ist.

3. System nach Anspruch 1 oder 2, wobei das Stützelement einen Flansch umfasst, der ein erstes Ende (F1) hat, das ausgeführt ist, um stabil an dem Fahrzeugrahmen befestigt zu werden, und ein zweites Ende (F2) gegenüber dem ersten Ende, das die Aufnahme (H) umfasst und wobei das Filterelement eine oder mehrere Biegungen umfasst, die in einer Längserstreckung des Flansches (F) angeordnet sind, um ihn elastisch zu machen.

4. System nach einem der vorstehenden Ansprüche, wobei das zweite Ende (MC2) der Hülse ein Außengewinde umfasst, und das System eine Sicherungsringmutter (G) umfasst, die ausgeführt ist, um mit dem Außengewinde verbunden zu werden, um jede axiale Bewegung des Behälters in Bezug auf die Aufnahme (H) des Stützelements zu verhindern.

5. System nach einem der vorstehenden Ansprüche 1 bis 3, wobei der zweite Anschluss (P1) mittels eines Außengewindes erhalten wird, and wobei das System weiter einen pneumatischen/hydraulischen Verbinder umfasst, der ausgeführt ist, um auf das Außengewinde geschraubt zu werden, um eine pneumatische/hydraulische Verbindung bereitzustellen und gleichzeitig jede axiale Bewegung des Behälters in Bezug auf die Aufnahme (H) des Stützelements zu verhindern.

6. System nach einem der vorstehenden Ansprüche, bei welchem der Flansch aus mehreren Teilen besteht, die mittels Verbindungsschrauben verbunden werden können.

7. System nach Anspruch 2, wobei die Beschichtung (R) in Kontakt mit dem Innenboden einer Rillenscheibe (PL) ist, die aus zwei Hälften besteht, welche entlang einer Ebene senkrecht zur Rotationsachse (X) der Rillenscheibe getrennt werden können.

8. Ein Fahrzeug, umfassend einen Rahmen und ein pneumatisches/hydraulisches System mit einem entsprechenden Behälter (B), der mit dem Rahmen durch eine Verbindungssystem nach einem der Ansprüche 1 bis 7 verbunden ist.

9. Fahrzeug nach Anspruch 8, wobei der Rahmen aus zwei im Wesentlichen parallelen Längsträgern besteht und wobei der Behälter (B) so an dem Rahmen befestigt ist, dass eine entsprechende Erstreckungsachse (X) des Behälters im Wesentlichen parallel zu einer von den Längsträgern definierten Ebene ist.

10. Fahrzeug nach Anspruch 8, wobei der Rahmen aus zwei im Wesentlichen parallelen Längsträgern besteht und wobei der Behälter (B) transversal an den Längsträgern befestigt ist und wobei die Aufnahme (H) in mindestens einem der zwei Längsträger angeordnet ist.

## Revendications

1. Système (S) pour la connexion stable d'un réservoir (B) d'air comprimé ou d'huile hydraulique à un châssis de véhicule, le réservoir (B) ayant un orifice (P) central, configuré pour permettre une connexion pneumatique/hydraulique du réservoir à un système pneumatique/hydraulique dudit véhicule, le système comprenant :
- un manchon (MC) tubulaire cylindrique ayant une première extrémité (MC1) et une deuxième extrémité (MC2) opposée à la première, dans lequel la première extrémité est filetée d'une manière complémentaire par rapport audit orifice (P) et dans lequel ladite deuxième extrémité (MC2) est configurée pour définir un deuxième orifice (P1), permettant ainsi une connexion pneumatique/hydraulique du réservoir audit système pneumatique/hydraulique ;
- un élément de support (F), qui est connecté de manière stable au châssis dudit véhicule ou qui définit une portion de châssis dudit véhicule et qui comprend un siège (H) complémentaire dudit manchon (MC) ; et
- un dispositif de filtre (R, BT) pour filtrer des vibrations qui se propagent, du châssis dudit véhicule audit réservoir, agencé entre ledit élément de support et ledit manchon (MC) tubulaire.

2. Système selon la revendication 1, dans lequel ledit dispositif de filtre comprend un revêtement annulaire (R) réalisé en matériau résilient qui enveloppe ledit manchon (MC) sur au moins une portion d'un développement longitudinal correspondant, s'interposant ainsi entre ledit manchon et ledit siège (H) de ladite bride (F).

3. Système selon la revendication 1 ou revendication 2, dans lequel ledit élément de support comprend une bride ayant une première extrémité (F1) configurée pour être connectée de manière stable audit châssis de véhicule, et une deuxième extrémité (F2) opposée à la première, comprenant ledit siège (H), et dans lequel ledit dispositif de filtre comprend un ou plusieurs coudes prévus dans un développement longitudinal de ladite bride (F) pour la rendre élastique.

4. Système selon l'une quelconque des revendications précédentes, dans lequel ladite deuxième extrémité (MC2) du manchon comprend un filetage extérieur, et le système comprend un écrou à bague de verrouillage (G) conçu pour être connecté audit filetage extérieur pour empêcher tout déplacement axial dudit réservoir par rapport audit siège (H) dudit élément de support.

5. Système selon l'une quelconque des revendications précédentes 1 à 3, dans lequel ledit deuxième orifice (P1) est obtenu au moyen d'un filetage extérieur, et dans lequel ledit système comprend en outre un connecteur pneumatique/hydraulique conçu pour être vissé sur ledit filetage extérieur pour assurer ladite connexion pneumatique/hydraulique et empêcher simultanément tout déplacement axial dudit réservoir par rapport audit siège (H) dudit élément de support.

6. Système selon l'une quelconque des revendications précédentes, dans lequel ladite bride est réalisée en plusieurs parties qui peuvent être connectées au moyen de vis de connexion.

7. Système selon la revendication 2, dans lequel ledit revêtement (R) est en contact avec une base intérieure d'une poulie (PL) constituée de deux moitiés qui peuvent être séparées le long d'un plan perpendiculaire à un axe de rotation (X) de la poulie.

8. Véhicule comprenant un châssis et un système pneumatique/hydraulique, avec un réservoir (B) correspondant connecté au châssis au moyen d'un système de connexion selon l'une quelconque des revendications 1 à 7.

9. Véhicule selon la revendication 8, dans lequel ledit châssis est formé par une paire d'organes longitudinaux approximativement parallèles, et dans lequel ledit réservoir (B) est connecté au châssis de sorte qu'un axe de développement (X) correspondant du réservoir soit approximativement parallèle à un plan défini par lesdits organes longitudinaux.

10. Véhicule selon la revendication 8, dans lequel ledit châssis est formé par une paire d'organes longitudinaux approximativement parallèles, et dans lequel ledit réservoir (B) est connecté transversalement auxdits organes longitudinaux, et dans lequel ledit siège (H) est prévu dans au moins un des deux organes longitudinaux.
